# EUROPEAN PATENT APPLICATION

(11) **EP 2 498 153 A2**
(43) Date of publication of application: **12.09.2012**
(21) Application number: 12157984.1
(22) Date of filing: 02.03.2012
(51) Int. Cl.: G05B 15/02

(54) **Home occupancy detection switches**

(30) Priority: 10.03.2011 US 201113044617
(71) Applicant: General Electric Company, Schenectady, NY 12345 (US)
(72) Inventor: Ree, Bradley Richard, Atlanta, GA Georgia 30339-8402 (US); Lafrance, Ryan Marc, Atlanta, GA Georgia 30339 (US)
(74) Representative: Cleary, Fidelma

(57) **Abstract**

Disclosed are methodologies for enabling energy conservation in a home (102). Occupancy by an entity of the home may be detected and used by a utility meter (108) associated with the home to control and/or adjust operation of energy consuming devices based, at least in part, on the occupancy state of the home. Occupancy detection is based on signals received from devices (200) generally associated with those entities that may from time to time occupy the home. In selected embodiments, detection of a Bluetooth or RFID device associated with a home occupant including items such as key chains (204), work ID cards (206), Bluetooth enable equipment such as cell phones (210) and audio equipment (212) or infrared signals from presence detectors (112, 114) may be used to provide indications of home occupancy.

## Description

### FIELD OF THE INVENTION

The present subject matter relates to energy conservation. More particularly, the present subject matter relates to apparatus and methodologies for assisting a home owner in conserving energy by reducing power consumption during periods of absence from a residence.

### BACKGROUND OF THE INVENTION

Energy conservation is an ongoing concern among may individuals both in residential as well as commercial environments. For home owners, energy conservation may be particularly important with respect to an owners ability to lower energy costs. Of course such cost saving aspects is not unimportant in other environments as well.

For home owners, an easy way to reduce power consumption is to turn off devices when you leave home. For example, a power meter can reduce overall power consumption by turning devices on and off for you when you leave home. For various reasons, however, it often happens that the effort required to turn off energy consuming device is not addressed. It would be desirable, therefore, to have the ability to detect when someone leaves or enters a residence or other area in order to control aspects of power consumption based on actual presence of an energy usage requiring entity.

### BRIEF DESCRIPTION OF THE INVENTION

Aspects and advantages of the invention will be set forth in part in the following description, or may be obvious from the description, or may be learned through practice of the invention.

The present subject matter relates to methodologies for enabling home energy conservation including providing a utility meter, providing an indication of home occupancy based on detection of a device associated with an entity at least periodically occupying the home, and configuring the utility meter to make decisions regarding power usage based at least in part on the indications of home occupancy. Such method also provides for configuring the utility meter to adjust the operation of at least one energy consuming device to conserve energy upon detection of changes in indication of home occupancy.

The method may also provide for configuring the utility meter to operate as an energy service interface device and/or may provide indications of home occupancy by providing an indication of detection of a signal from at least one of a Bluetooth or RFID enabled device carried by an entity.

The method may also include configuring the utility meter to make decisions regarding power usage based at least in part on environmental conditions. The utility meter may be configured to make decisions regarding power usage based at least in part on the time of day or the season of the year.

The method may also provide for adjusting thermostat temperature settings for a home HVAC system and/or adjusting the operation of a home entertainment system.

The method may provide an indication of home occupancy by providing a signal from an infrared detector, on the basis of a signal from a manually operated switch that, may correspond to a separately purposed switch or to a signal from an entry access keypad switch.

The method may also provide an indication of home occupancy by providing and indication of home occupancy by a particular entity and adjusts the operation of at least one energy consuming device based at least in part on the particular entity.

The method may also provide that adjustment of the operation of at least one energy consuming device is accomplished using a home automation network and, a demand response/load control event may be generated.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Embodiments of the present invention will now be described, by way of example only, with reference to the accompanying drawings in which:
Figure 1 illustrates an exemplary presences detecting and power conservation system in accordance with present technology; and
Figure 2 representatively illustrates alternative and additional occupancy detection items and methodologies as may be employed with the present technology.

Repeat use of reference characters throughout the present specification and appended drawings is intended to represent same or analogous features or elements of the invention.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

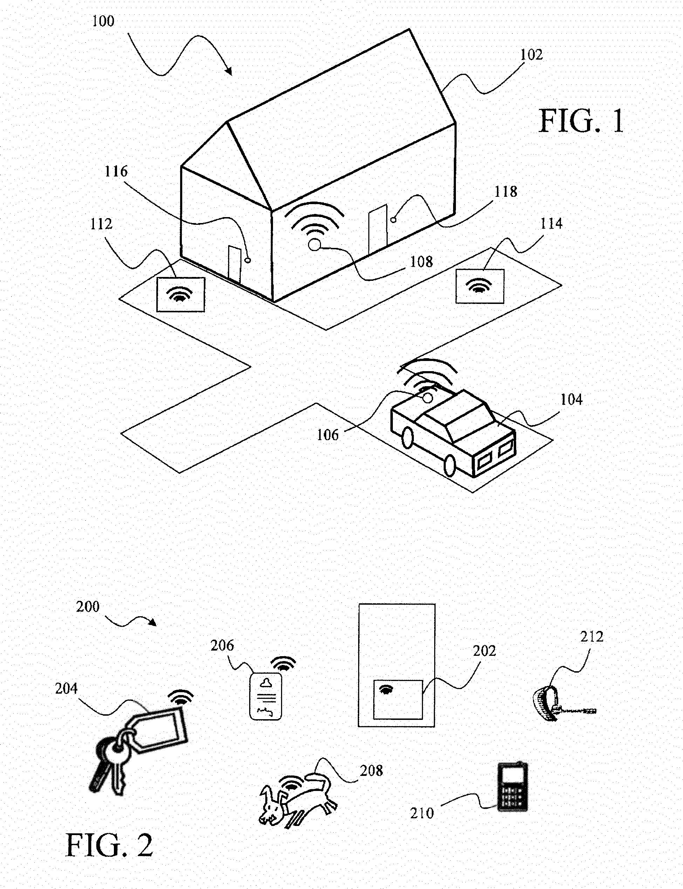

Reference will now be made in detail to the presently preferred embodiments of the subject home occupancy detection switches. Referring now to the drawings, Figure 1 illustrates an exemplary occupancy detecting and power conservation system 100 in accordance with aspects of the present subject matter. As illustrated, the present subject matter addresses power conservation goals by providing methods and devices for detecting when individuals enter or leave a home 102.

In an exemplary configuration, when and individual leaves a home 102, for example, by driving away in a vehicle 104, equipment that may already be installed in vehicle 104 may be employed to determine occupancy information. For example, signals transmitted from a Bluetooth enable audio system 106 installed in vehicle 104 may be employed to provide occupancy information. This occupancy information may then be used to control devices within or proximate home 102 including, without limitation, appliances, lights, HVAC systems, and other power consuming equipment. In an exemplary configuration, a detected absence from home 102 may resulting in changes including adjustments in HVAC thermostat temperature settings as well as the turning off of certain lighting devices.

It should be appreciated that alternative changes may be made upon detecting that an individual has entered home 102 after being away. For example, the present technology may also be used to automatically turn on lighting or to adjust the thermostat settings of an HVAC system upon detecting home occupancy following a period where home 102 has remained unoccupied.

With further respect to Figure 1, in accordance with present technology, any Bluetooth device, representatively Bluetooth device 106 installed in vehicle 104, may be detected by, for example, a utility meter 108 associated with home 102. As previously noted, such Bluetooth device 106 may correspond to a Bluetooth enabled audio system installed in vehicle 104. Alternatively, the Bluetooth device may correspond to other Bluetooth enabled devices that may be carried by an individual and would normally be removed from the area of home 102 with the departure of the individual.

In accordance with present technology, utility meter 108 may be associated with and in communications with additional unillustrated equipment within home 102 to provide switching functions for various controllable devices associated with home 102. Alternatively, switching equipment may be provided as an operational feature of utility meter 108 itself. Such equipment may correspond to a centralized control device, for example, an energy service interface (ESI), as a portion of a home area network that may employ yet additional equipment to control energy consumption of various energy consuming devices via power line control using the home wiring for communications with a controllable switch, for example, or by separate direct wiring or by wireless control. In such instances the meter may function as the ESI and, upon receipt of occupancy signals, generate control programming to adjust operations of home devices.

Controlled devices may include, without limitation, lighting, HVAC systems, entertainment equipment including such as radios, televisions, tape and CD players, electronic games, and other such energy consuming equipment. In particular, emphasis may be directed to controlling operation of energy consuming devices that may, for energy conservation considerations, be turned off or at least controlled to lower energy consumption levels when home 102 is unoccupied or differently occupied.

It should be recognized that there are many methods to deliver the messages between the meter and the devices to be controlled. These networks may include proprietary networks and protocols, or standards based methods. For example, home automation networks based on X10, sub GHz radios, power line carrier, Ethernet, or similar types of networks may be deployed. Smart Energy Profile (SEP) is another possible network. SEP can be deployed in the meters, and load control devices. A signal would be passed to the meter that the home appliances should be put in low power mode. The meter would then generate a demand response/ load control event, which then is passed to the appliances, HVAC, or pool pump.

With further reverence to Figure 1, it will be seen that additional sensor devices may be incorporated within the present technology as further mechanisms for occupancy detection. For example, infrared sensors 112, 114 may detect the presence of a vehicle at a particular location, for example, parked in a particular driveway or garage location as illustrated by sensor 112 or in front of home 102 as illustrated by sensor 114. These sensors may include transmitter components to wireless transmit a signal to utility meter 108 that may then be passed to additional control equipment within home 102 either by wired or wireless communications techniques, to control selected energy consuming devices. Alternatively, sensors 112, 114 may be coupled to utility meter 108 by wired connections or, alternatively yet, may communicate with utility meter 108 via associated separate means including wired and wireless communications methodologies.

With reference to Figure 2, a number of additional occupancy detection devices 200 may also be used in combination with or without vehicle related devices to determine occupancy of a home. Such devices may include, without limitation, a keychain device 204, a smart phone 210 or any phone with Bluetooth capability, and a Bluetooth headset 212.

Similarly, devices employing other technologies such as, without limitation, RFID technologies may also be used to establish occupancy of a home or a particular area within a home or other structure where it may be desirable to control energy usage based on occupancy. Such devices may include, without limitation, an identification card 206 as might be issued to an individual as a work ID badge or a parking pass that provides access authorization for a holder to an area or building. Key chain device 204 may, instead of the previously mentioned Bluetooth capability, be configured to employ RFID technology. In such instance, home occupancy might be detected as an individual hangs the key chain device on a hook proximate an RFID sensor.

In a residential environment, such devices may correspond to an RFID chip embedded under the skin of a family pet 208. Such RFID chips are commonly used to identify the owner of a lost pet. RFID pet tags may be employed with the present technology to determine when a pet enters and leaves a home by incorporating an animal door RFID reader in association with a pet door 202. Detection of a pet entering or leaving home 102 may be employed within the present technology to address concerns such as lighting and providing food or water for the pet.

In certain embodiments of the present technology, there may be additional potential to identify a particular individual's presence and to provided for selective control of energy usage device based on such an identification. For example, with reference again to Figure 1, a particular individual may normally park their vehicle in a driveway such that the vehicle may be detected by infrared detector 112. Another individual may normally park their vehicle on the street in front of home 102. Such individual may also be identified via the signal from sensor 114. In such embodiments, diverse energy consumption functionality may be activated depending on which one or both of the individuals identified are present, or have recently arrived at or departed from home 102.

In accordance with still further embodiments of the present technology, pushbutton switches 116, 118 may be provided at entry points of home 102 which may be operated by an individual entering or leaving home 102. In this embodiment, different pre-programmed energy controlling operations may be initiated based on identification of which switch 116, 118 is operated. In some embodiments of the present technology, switches 116, 118 may correspond to switches that may already be present at the home or installed with alternative primary goals. For example, switches 116, 118 may correspond to a separately purposed keypad type switch normally used for entry access to the home. In these instances, proper activation of the keypad switches to gain access to the home may also provide a signal to utility meter 108 indicative of occupancy.

In this embodiment also, as well as the other embodiments of the present technology disclosed herein, additional condition signals may be employed so that the equipment associated with utility meter 108 may intelligently decide or select from different operational options. To this end, energy controlling functions, in addition to being based on occupancy, may also be based on such conditions as time of day, outside and/or inside temperature, meteorological conditions including without limitation, light levels, the presence of rain, wind, or other adverse conditions, and other conditions extending to such as season of the year and day of week.

Further still, alternative energy controlling functions may be initiated upon detection of entrance or exit of an individual from a home while the home remains occupied.

For example, the system, in accordance with present technology, may keep track of the number of individuals within home 102 and adjust responses accordingly.

In other embodiments, the individual identified by ID card 206 of Figure 2 may be uniquely identified while in other instances one pet 208 may be differentiated from a second pet so that individualized operation of energy consuming devices may be provided.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for enabling home energy conservation, comprising:
providing a utility meter (108);
providing an indication of home occupancy based on detection of a device (200) associated with an entity at least periodically occupying the home (102);
configuring the utility meter to make decisions regarding power usage based at least in part on the indications of home occupancy; and
configuring the utility meter to adjust the operation of at least one energy consuming device to conserve energy upon detection of changes in indication of home occupancy.

2. The method of claim 1, further comprising:
configuring the utility meter (108) to operate as an energy service interface device.

3. The method of claim 1 or 2, wherein providing indications of home occupancy comprises providing an indication of detection of a signal from at least one of a Bluetooth (210, 212) or RFID (206) enabled device carried by an entity (208).

4. The method of any of claims 1 to 3, further comprising:
configuring the utility meter (108) to make decisions regarding power usage based at least in part on environmental conditions.

5. The method of any of claims 1 to 4, further comprising:
configuring the utility meter (108) to make decisions regarding power usage based at least in part on the time of day.

6. The method of any of claims 1 to 5, further comprising:
configuring the utility meter (108) to make decisions regarding power usage based at least in part on the season of the year.

7. The method of any preceding claim, wherein adjusting comprises adjusting thermostat temperature settings for a home HVAC system.

8. The method of any preceding claim, wherein adjusting comprises adjusting the operation of a home entertainment system.

9. The method of any preceding claim, wherein providing an indication of home occupancy comprises providing a signal from an infr' ared detector (112, 114).

10. The method of any preceding claim, wherein providing an indication of home occupancy comprises providing a signal from a manually operated switch (116, 118).

11. The method of any preceding claim, wherein providing an indication of home occupancy comprises providing a signal from a separately purposed switch (116).

12. The method of any preceding claim, wherein providing an indication of home occupancy comprises providing a signal from an entry access keypad switch (116).

13. The method of any preceding claim, wherein providing an indication of home occupancy comprises providing an indication of home occupancy by a particular entity; and wherein adjusting comprises adjusting the operation of at least one energy consuming device based at least in part on the particular entity.

14. The method of any preceding claim, wherein adjustment of the operation of at least one energy consuming device is accomplished using a home automation network.

15. The method of claim 14, further comprising generating a demand response/load control event.
